# EUROPEAN PATENT APPLICATION

(11) **EP 2 519 025 A2**
(43) Date of publication of application: **31.10.2012**
(21) Application number: 11171737.7
(22) Date of filing: 28.06.2011
(51) Int. Cl.: H04N 21/482

(54) **Apparatus, and associated method, for forming a media play-out list**

(30) Priority: 30.04.2011 US 98424
(71) Applicant: Research In Motion Limited, Waterloo, ON N2L 3W8 (CA)
(72) Inventor: Agar, John Michael, Waterloo, Ontario N2L 3W8 (CA); Boucher, Antoine, Waterloo, Ontario N2L 3W8 (CA)
(74) Representative: Hibbert, Juliet Jane Grace

(57) **Abstract**

An apparatus, and an associated method, forms a media play-out list of media, selected from a media database. A temporal indication is provided, and an estimated event is estimated based upon the temporal information. Indication of the estimated event is correlated with metadata of media stored at the media database. Media corresponding to metadata that correlates well with the estimated event is amenable for inclusion in the media play-out list.

## Description

The present disclosure relates generally to a manner by which to create a media play-out list of media for play-out at a media device. More particularly, the present disclosure relates to an apparatus, and an associated, method, by which automatically to create the media play-out list with, or identifying, media content based on predicted interest of the media to a media content consumer.

Temporal information, such as date information, is used to estimate a relevant event. And, the estimated event is used to select the media that is to form part of the media play-out list. The tedious and time-consuming task of manually selecting the media to be part of the media play-out list is of obviated.

### Background

Many new electronic devices have been developed in recent years as a result of advancements in technology. Such devices include devices that provide new functions and services and also devices that provide improved operability of existing functions and services.

For instance, advancements in communication technologies have permitted the development and deployment of new communication devices, equipment, and communication infrastructures that provide for communications using the communication devices and equipment. Use of such new devices has changed the lives and daily habits of many.

Wireless communication systems, such as cellular, WiFi, and other analogous radio systems, are exemplary of communication systems that include, or are based upon, advancements in communication technologies. Such systems have achieved significant levels of usage. And, with additional technological capabilities along with decreasing equipment and operational costs, increased communication capabilities, at lowered costs, is, and shall likely continue to be, provided. Successive generations of wireless communication systems have been developed and deployed. For instance, early-generation, cellular communication systems that were first installed provided primarily for voice communications and provided only limited data communications. Successor-generation, cellular communication systems provided increasingly data-intensive communication capabilities. And, new-generation, cellular communication systems provide for highly data-intensive communication services as well as improved interoperability with other types of communication systems.

Communications made by way of cellular, and other analogous, radio communication systems, are typically made through use of portable wireless devices. The portable wireless devices are typically of dimensions and weights permitting the devices easily to be hand carried and, e.g., stored in a shirt pocket or purse when not in use. A wireless device is thereby likely readily to be available for use whenever needed.

A wireless device includes radio transceiver circuitry that transceives communication signals to permit both the reception and transmission of information. Wireless devices are sometimes provided with additional functionality, both communication-related functionality and other functionality. The additional functionality is sometimes associated with processing functions that provide for the manipulation of data. When soconfigured, the wireless device forms a multi-functional device, having multiple functionalities.

An exemplary functionality sometimes provided to a wireless device is media player functionality. Media player functionality provides for the play-out of media, such as audio files, video files, and multimedia files. Media that is played out at a device having media player functionality is variously stored at the device or provided thereto and played-out once received. A streaming media application is exemplary of an application in which media is played out at a device having media player functionality.

Sometimes, a consumer of the media elects to view, or otherwise have played-out, a series or sequence of different media files. Once formed, the different media files define a list having entries corresponding to media selected for play-out. Such a list is referred to herein as a media play-out list.

Selection of media to form part of the media play-out list is sometimes selected from a large database of media. The creator of the media play-out list conventionally iterates through a media database to locate the media that is to be included in the media play-out list. When the media is to be selected from amongst a large number of media files, the conventional need to iterate through the stored media, or otherwise manually to select the media that is to be included in the media play-out list quickly becomes tedious. And, a large amount of time is often times also required to make selection of the media to be included in the media play-out list.

Creation of the media play-out list might therefore be a frustrating exercise. For instance, if the media play-out is to be of a slideshow, i.e., a play-out of a sequence of photographic images, selection must be made of, sometimes, a large number of photographic-image files from an even larger number of photographic-image, or other media, files stored at a database. Analogous selection procedures are typically required when selecting other types of media to be included in a media play-out list.

Difficulties with conventional procedures by which to create a media play-out list lessen the enjoyment of a consumer of the media. An improvement to the conventional procedures would therefore be advantageous.

It is in light of this background information related to media player functionality that the significant improvements of the present disclosure have evolved.

### Brief Description of the Drawings

Figure 1 illustrates a functional block diagram of a communication system having a device including an implementation of the present disclosure forming a portion thereof.

Figure 2 illustrates a process diagram representative of the process of operation of an implementation of the present disclosure.

Figure 3 illustrates a process diagram also representative of the process of operation of an implementation of the present disclosure.

Figure 4 illustrates a method flow diagram representative of the method of operation of an implementation of the present disclosure.

### Detailed Description

The present disclosure, accordingly, advantageously provides an apparatus, and an associated method, for creating a media playlist of media for play-out at a media device.

Through operation of an implementation of the present disclosure, a manner is provided by which automatically to create the media play-out list with media content. The media content selected to form the media play-out list is media selected based upon a predicted interest to a media content consumer.

In one aspect of the present disclosure, the temporal information, such as date information, is used to estimate a relevant event. And, the estimated event is used to select the media that is included in the media playlist. Manual selection of the media to form the media play-out list, which is sometimes tedious and time-consuming, is obviated as the media play-out list is automatically created with media predicted to be of interest to the media consumer.

In another aspect of the present disclosure, a temporal indication, such as a date indication, is utilized pursuant to the formation of the media play-out. The temporal information is utilized to estimate a cultural event in temporal proximity to the provided temporal indication. The estimated event is utilized in the selection of content that is to form the media play-out list. The estimated event comprises, e.g., an event that occurs annually, or at another repeated, or other, interval.

In another aspect of the present disclosure, a cultural event database is provided. The cultural event database contains entries of cultural events of potential significance. The cultural event database is accessible by the event estimator. The event estimated by the event estimator is an event that forms an entry in the cultural event database that is in temporal proximity to the temporal information provided to the event estimator. Cultural events stored in the cultural event database and forming entries thereof include, for instance, the dates of holidays, birthdays, etcetera.

In another aspect of the present disclosure, an indication of the estimated event is provided to a predictor. The predictor predicts media that is likely to be of interest to a consumer of the media. And, responsive to the predictions that are made, the predictor forms a media play-out list populated with identifications of media predicted to be of interest to a consumer of the media, i.e., a viewer of the media when the media is subsequently played-out.

In another aspect of the present disclosure, the predictor accesses metadata associated with media that is available for inclusion in the media-play-out list. The metadata includes information related to the associated media and includes, for instance, information identifying the media and any cultural events with which the media is associated. Correlation is performed by the predictor to correlate media having metadata corresponding to, or similar to, the estimated event. Media having metadata that correlates well with the estimated event is amenable for inclusion as media to be included in the play-out list.

In another aspect of the present disclosure, the cultural event database is dynamically updatable. That is to say, events are added to the database, if appropriate. Events are discernable from metadata of media stored or otherwise maintained at the media database, i.e., media library. The media, for instance, is selected, either obtained locally, or provided by an external source. The metadata, if indicative of an event other than an event already stored at the cultural event database, is added to the cultural event database. By such addition, the event estimator is able to make selection of the estimated event from a larger database having additional entries.

In another aspect of the present disclosure, a prompter is provided to prompt a media consumer to identify events that are unable to be ascertained otherwise. For instance, a prompt generated by the prompter causes display at a display element of an inquiry of a viewer of the event associated with collected and stored media. The media consumer, in response to the display of the inquiry, is able to input, such as by way of an input actuator, a response to the inquiry. The response identifies, e.g., an event that also is added to the cultural event database, available for subsequent event estimation.

In another aspect of the present disclosure, media, and associated metadata thereof, stored at a media database is analyzed to ascertain clusters of media having similar dates of creation, or other time-proximity indicia. Dates associated with such clusters are determined to be dates of significant events.

In another aspect of the present disclosure, the predictor functions as a filter to permit inclusion of, or prevent from consideration from inclusion of, media. For instance, if the temporal information indicates a date in the month of June, media associated with Christmas would be prevented from being considered for inclusion in the media play-out list. That is to say, media is 'white-listed' or 'black-listed' to permit certain media, 'white-listed' media, to list and other media, 'black-listed' media, not to be eligible for inclusion in the media play-out list.

Thereby, the media play-out list is created without requiring a media consumer to manually select each media file that is to be included in the media play-out list.

In these and other aspects, therefore, an apparatus, and an associated method, is provided for facilitating formation of a media playout list of selected media of database-stored media. An event estimator is configured to estimate at least an event-type of an event. A media selector is configured to select the selected media to form the media playout list. Selection is made responsive to correlation of metadata of media of the database-stored media with an estimation made by the event estimator.

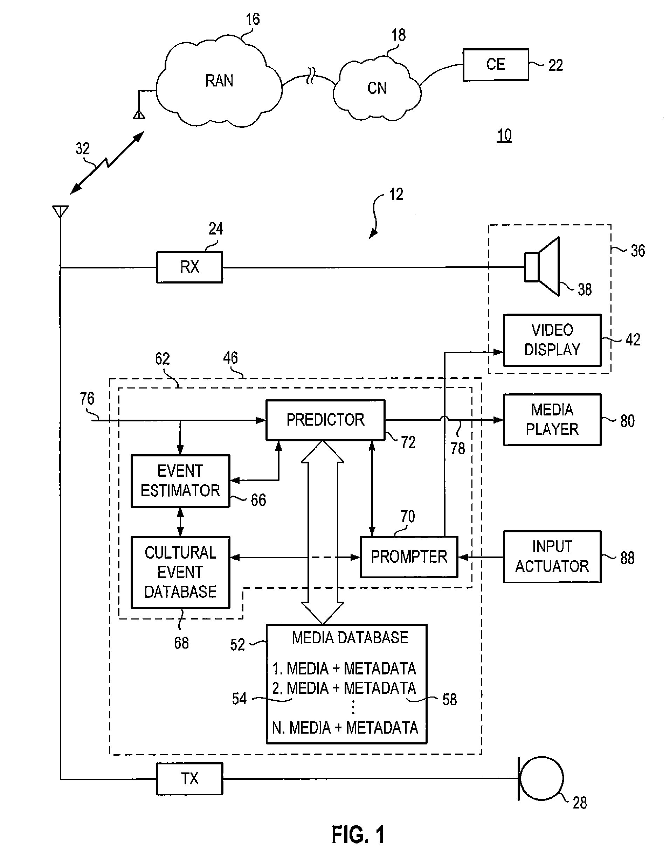

Turning first, therefore, to Figure 1, a communication system provides for communications with wireless devices, such as the wireless device 12. In the exemplary implementation, the communication system 10 forms a cellular, or cellular-like, communication system that operates in general conformity with standard protocols defined in an operating specification of a cellular, or other, communication standard. In other implementations, the communication system is operable in other manners, and the communication system is analogously representative of any of various other communication systems and communication-system types, both wireless communication systems and wire line communication systems.

Additionally, while the device 12 in the exemplary implementation shown in Figure 1 comprises a communication device capable of communicating in the communication system, in another implementation, the device 12 forms a standalone device that includes the functionality of an implementation of the present disclosure. That is to say, in one alternate implementation, the device 12 forms a device that does not include separate communication capability and, for instance, in one implementation, the device 12 comprises a standalone, media player.

The communication system 10 comprises a network part, which here includes a radio access network (RAN) 16 and a core network 18. A communication endpoint (CE) 22 is placed in communication connectivity with the core network 18. The communication endpoint 22 is representative of any of various communication devices including, for instance, a computer server that sources media for download to the device 12.

The device 12 here includes transceiver circuitry having a receive part 24 and a transmit part 26. The receive part 24 operates to receive and to operate upon information received at the device 12. And, the transmit part 26 operates to operate upon and transmit information sourced at, or provided to, the device 12.

For instance, information sourced at the device 12, such as at an input transducer 28, is operated upon by the transmit part 26 and caused to be communicated upon channels 32 (represented by the arrow shown in Figure 1) defined upon a radio air interface extending between the network part and the device 12. When delivered to the network part, the information is routed through the radio access network 16 and the core network 18 or delivery to a destination, such as the communication endpoint 22. Analogously, information sourced at the communication endpoint 22 for delivery to the device 12 is routed through the core network 18, the radio access network 16, sent upon communication channels 32 formed upon the radio air interface, and delivered to the device 12. When delivered, the receive part 24 operates upon the received information and provides the information, available for playout at the displayable element 36, here formed of an acoustic transducer 38 and a video transducer 42.

The device 12 further includes apparatus 46 of an implementation of the present disclosure. The apparatus 46 provides media play-out functionality of media stored at, or provided to, the device 12. The media stored at the device 12 is here stored at a media database 52. In the exemplary implementation, the media database is of a high storage capacity, permitting storage of large amounts of data, such as media files into which the media is formatted. Here, N media files 54 are stored at the database 52. The media files are of any of various file formats and types. Media files 54 comprise, for instance, audio files, photographic files, video files, and combinations thereof. And, such files are formatted in any of various conventional manners. For instance, the media is variously formatted into .MPG, .WAV, .MP3, .JPG, etcetera. types of file formats.

Metadata 58 is associated with corresponding ones of the media files 54. The metadata 58 comprises data about the corresponding media and, e.g., identifies the contents of the media, such as a date at which the media was recorded, an event with which the media is associated, and any other data that is descriptive of the corresponding media file or use thereof.

The apparatus 46 further includes a playlist generator 62 that generates a playlist of media that is determinative of play-out of media, here media files of the media files stored at the media database 52. The playlist generator is functionally represented, formed of functional elements implementable in any desired manner, including, for instance, hardware elements, firmware elements, processing circuitry capable of executing code or other algorithms, and combinations thereof. The play list generator 62 here includes an event estimator 66, a cultural event database 68, a prompter 70, and a predictor 72. The playlist generator, or at least the predictor functionality thereof, is placeable in connectivity with the media data base 52 to permit access to data stored thereat. The playlist generator is also provided with input information on the line 76. The input information here comprises temporal information, such as the day of year or other date-related information. The information provided on the lines 76 is delivered to the event estimator 66.

The event estimator operates to estimate an event in temporal proximity to the temporal information provided to the playlist generator on the line 76. The event comprises, e.g., a cultural event, such as a secular or religious holiday. Or, the event is an event that otherwise reoccurs periodically, such as annually, or reoccurs or is related to another event that occurs or is memorialized at a recurring, or other, interval.

The event estimator accesses data entries of the cultural event database 68. The entries of the database 68 identify events together with associated dates. The events include, e.g., the aforementioned secular or religious, or other, cultural events. For instance, the cultural event comprises a Christmas, Halloween, New Year, Chinese New Year, Hanukkah, or other holiday as well as a birthday, an anniversary, and other temporally-associated events. An event in temporal proximity to the provided information is ascertained through access to the entries of the cultural event database 68. And, once estimation is made, an indication of the estimation is provided to the predictor 72, here represented by way of the line 82.

The predictor, using the indication of the estimated event or, alternately, the temporal information provided by way of the line 76, accesses the media database 52 and searches the media stored thereat to identify media that correlates with the estimated event or temporal information. That is to say, the predictor identifies media, based upon corresponding media data, that correlates well with the estimated event or temporal information. For instance, media metadata having a creation or storage date within a selected range, or window about, the estimated event date is considered to correlate with, viz., correlate well with, the estimated event. And, the associated media is considered to be eligible to form part of the play-out list. By way of an example, a window of seven days is defined. Media having a creation, storage, or other appropriate temporal indication within a seven day window centered at, or otherwise positioned about the estimated event date is eligible for inclusion in the play-out list. An analogous procedure is also used when the event date is defined to be a current date, e.g., today. A window defined about the current date triggers creation of a play-out list of media having dates in, e.g., prior years brings back fond memories of, for instance, a birthday of a child from previous years would be automatically provided to a consumer of the media. Once identified, the media is identified as being amenable for selection for inclusion in a media play-out list. And, the predictor forms a play-out list, here on the line 78, populated with identifications of media 54 to playout pursuance to playout of the selected media. The play-out list is provided to the media player 80, which utilizes the list to access media data and play-out the media identifier in the list.

The media selected by the predictor to be included, i.e., identifications of which are to be included, in the play-out list, are further made according to additional criteria. For instance, the media selected to form part of the media play-out list is limited to a particular media-type, such as photographic images, audio files, etcetera. Additional, or other, criteria are also utilized by the predictor in forming the media play-out list.

The predictor operates in a manner analogous to operation of a filter to permit certain of the media files to be available for selection for inclusion in the media play-out list and to prevent inclusion of other media files from the media play-out list. For instance, if the estimated event or temporal information indicates a mid-year event or timeframe, the predictor excludes from consideration for inclusion media files that are associated with Christmas. That is to say, certain media is 'white-listed', that is, permitted to be included in the media play-out list. And, other media is 'black-listed', that is, prevented from being included in the media play-out list.

In one implementation, the predictor selects media for inclusion in the media play-out list to increase the percentage, or amount, of media associated with a particular event as the event approaches. For instance, the rate at which Christmas-related media is included in the list increases as the 25 December date approaches.

In a further implementation, the cultural event database 68 acts as a preprogrammed seed to assist in predictions made by the predictor 72 and, over time, personal events based upon metadata 58 of media stored at the media database 52 permits new events to be "learned". That is to say, that is to say, recurring metadata indications of media identify events. For instance, birthdays are learned and added to the database, e.g., learn from clusters of photographic image files created and stored at about the same day every year. When identified, such events are added to the event database. Media 54 and corresponding metadata 58 stored at the media database 52 is analyzed to ascertain clusters of media created or saved at similar dates. Dates, so-ascertained, are considered to be associated with significant events. In this manner, an estimated event comprises a cluster of media that is created or modified around a central date. For example, at a birthday party in a prior year, thirty photos are taken on a single date. The thirty photos forms a cluster. Clusters of media are detected in relation to surrounding media and high densities of occurrence, such as the thirty photos, is marked as an estimated event. If, for example, an average of three photos are taken on a daily basis, the three photos becomes a baseline. Any peak of content that is beyond the baseline, which defines a threshold, is considered to be an estimated event. The threshold, defined by the baseline, is, in one implementation tunable, or otherwise modifiable, to improve results. As thirty photos is greater than the threshold of three, the associated date is considered to be an event.

Significant events that are not otherwise identifiable are, in one implementation, the cause of prompts generated by the prompter 70. The prompter generates a prompt that is provided to a display element, such as the display 42 to prompt a user of the device 10 to enter an identification of the event that gives rise to the prompt. The information is provided, by way of an input actuator 88. The identification provided responsive to the prompt is also, e.g., added to the cultural event database.

In one exemplary implementation, the playlist generator generates a photo slideshow that spans multiple years of content, using media selected based upon the occurrence at an identified event, such as a birthday. Photographic images of birthdays of prior years are merged into a playlist that defines a slideshow. Home videos formed of video or multimedia files, is analogously formed. Audio files are also analogously utilized in the formation of an audio play-out list.

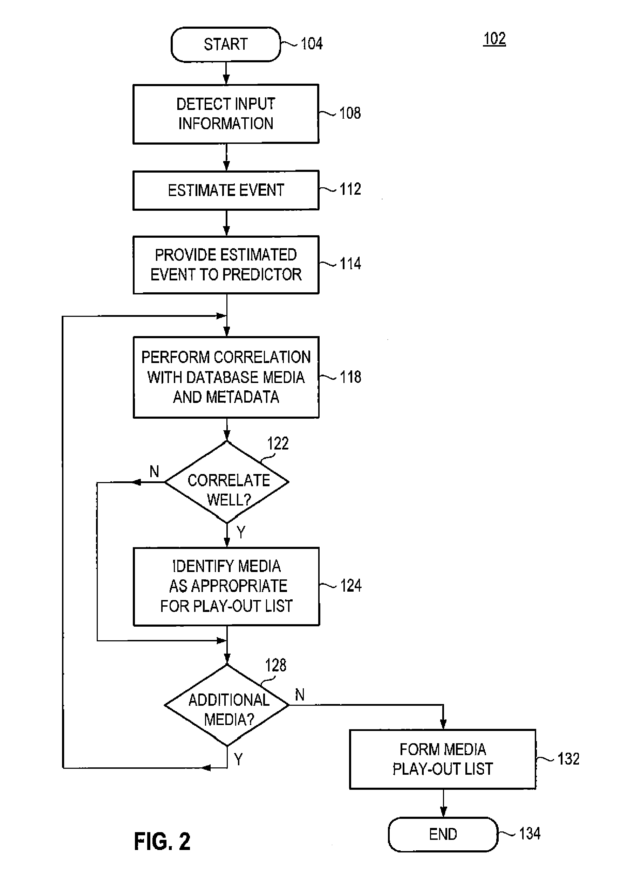

Turning next to Figure 2, a process 102 illustrates the process of operation of an implementation of the present disclosure. The process 102 provides for the formation of a media play-out list that is automatically created, populated with media content, or identifications thereof, that are predictions of media that would be selected by a content consumer if compelled to form the media play-out list manually.

First, after entry at the start block 104, detection is made, indicated by the block 108, of input temporal input, temporal information, such as day-of-year or other date-related information. Then, and as indicated by the block 112, an event is estimated that is in temporal proximity to the provided, temporal information. The estimated event is determined, in one implementation, through access to a cultural event database and selection of an event stored therein that is in temporal proximity to the temporal information.

Then, and as indicated by the block 114, the estimated event is provided to a predictor. That is to say, the estimated event forms an input used to form a play-out list formed of selected media.

Then, and as indicated by the block 118, metadata of media stored at a media database is correlated with the estimated event or other information. Media corresponding to metadata that correlates well with the estimated event is determined, as indicated by the decision block 122. If the metadata correlates well, an indication of the corresponding media is added to an available-for-inclusion list. That is to say, if the metadata correlates well with the estimated event, the corresponding media is amenable, and made available, for inclusion in a media play-out list.

A determination is made at the decision block 128 as to whether additional media files are available to correlate metadata with the estimated event. If so, the yes branch is taken back to the block 118, and the process continues. If no more media is available, the no branch is taken to the block 132. At the block 132, the play-out list is formed, populated with identities of at least selected ones of the media files having metadata that correlates well with the estimated event. Once formed, the play-out list is used by a media player to play-out the media contained in the media play-out list. The process ends at the end block 134.

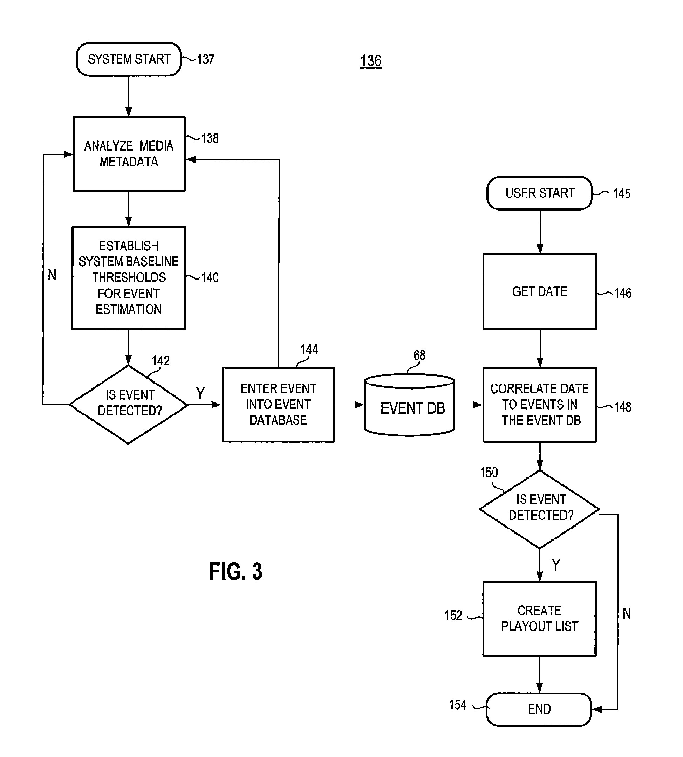

Figure 3 illustrates a process 136 representative of operation of an implementation of the present disclosure. The process illustrates a manner by which an event is added to the cultural event database 68. The process also illustrates use by a user, i.e., a media consumer, who utilizes a device, such as the device 12, shown in Figure 1, which utilizes an implementation of the present disclosure.

First, subsequent to system start, indicated by the block 137, operation of the process by which to identify and add an event to the database 68 commences. First, and as indicated by the block 138, media metadata is analyzed. Then, and as indicated by the block 140, a system baseline is established. The system defines a threshold for event estimation. In one implementation, described above, the baseline is the average number of media files that are created, stored, or modified on a daily basis.

Then, a determination is made, as indicated by the decision block 142, as to whether an event is detected. Detection is made, for instance, when greater than the threshold number of media files are created, stored, or modified, within a time period. If not, the no branch is taken back to the block 138. If, conversely, an event is detected, the yes branch is taken to the block 144.

At the block 144, the event is entered into the event database 68. The event database 68 is again shown in Figure 3. The event database is subsequently accessible during which a play-out list is created.

The process 136 also illustrates the process of creation of a play-out list, here initiated by a user, i.e., the content consumer.

First, subsequent to start, indicated by the start block 145, a temporal indication is provided, here a current date, i.e., "today". Then, and as indicated by the block 148, the entered temporal indication, the current date, is correlated to events stored at the event database 68. A determination is made, indicated by the decision block 150, as to whether an event stored at the event database that correlates with, i.e., matches or falls within a range of the current date. If so, the yes branch is taken to the block 152 and a playout list is created. If, conversely, an event is not detected at the decision block 150, the no branch is taken to the end block 154. A path is also taken from the block 152 to the end block 154.

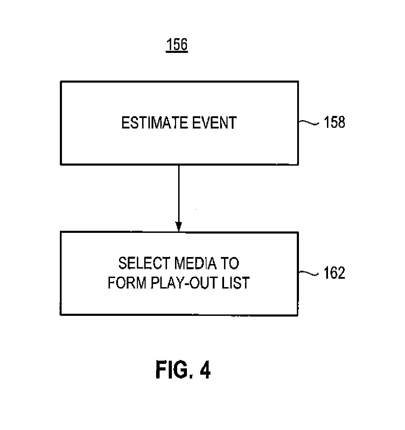

Figure 4 illustrates a method flow diagrams 156 representative of the method of operation of an implementation of the present disclosure. The method facilitates formation of a media playout list of selected media of database-stored media.

First, and as indicated by the block 158, at least an event-type of an event is estimated. Then, and as indicated by the block 162, media is selected to form the media playout list. Selection is made responsive to correlation of metadata of media of the database-stored media with an estimation of the at least the event-type of an event.

Thereby, a manner is provided by which to form a media play-out list with media predicted to be of interest to a consumer of the media.

Presently preferred implementations of the disclosure and many of improvements and advantages thereof have been described with a degree of particularity. The description is of preferred examples of implementing the disclosure, and the description of examples is not necessarily intended to limit the scope of the disclosure. The scope of the disclosure is defined by the following claims.

## Claims

1. An apparatus for facilitating formation of a media playout list of selected media of database-stored media, said apparatus comprising:
an event estimator configured to estimate at least an event-type of an event; and
a media selector configured to select the selected media to form the media playout list, selection made responsive to correlation of metadata of media of the database-stored media with an estimation made by said event estimator.

2. The apparatus of claim 1 wherein the event-type estimated by said event estimator exhibits a recurrence periodicity.

3. The apparatus of claim 2 wherein the recurrence periodicity exhibited by the event-type estimated by said event estimator comprises an anniversary occurrence.

4. The apparatus of claim 1 further comprising a cultural event database and
wherein estimation made by said estimator utilizes information maintained at said cultural event database.

5. The apparatus of claim 4 wherein entries contained in said cultural event database identify events having recurring occurrence.

6. The apparatus of claim 1 wherein said event estimator is configured to estimate the event.

7. The apparatus of claim 1 wherein said event estimator adapted to receive a temporal indication and wherein estimation made by said event estimator is responsive, at least in part, to the temporal indication.

8. The apparatus of claim 7 wherein the temporal indication comprises a date.

9. A method for facilitating formation of a media playout list of selected media of database-stored media, said method comprising:
estimating at least an event-type of an event; and
selecting the selected media to form the media playout list, selection made responsive to correlation of metadata of media of the database-stored media with an estimation made during said estimating.

10. The method of claim 9 wherein the event-type estimated during said estimating exhibits a recurrence periodicity.

11. The method of claim 10 wherein the recurrence periodicity exhibited by the event-type estimated during said estimating comprises an anniversary occurrence.

12. The method of claim 9 said estimating further comprises estimating the event-type utilizing a cultural event database maintained at a cultural event database.

13. The method of claim 12 wherein entries contained in the cultural event database identify events having recurring occurrence.

14. The method of claim 9 wherein said estimating further comprises receiving a temporal indication and wherein estimation made during said estimating is responsive, at least in part, to the temporal indication.

15. The method of claim 9 wherein selection made during said selecting is further responsive to indication of prior media playout.
